# EUROPÄISCHE PATENTANMELDUNG

(11) **EP 0 924 672 A2**
(43) Veröffentlichungstag der Anmeldung: **23.06.1999**
(21) Anmeldenummer: 98123124.4
(22) Anmeldetag: 04.12.1998
(51) Int. Cl.: G08B 13/24

(54) **Passiver Kleintransponder**

(30) Priorität: 04.12.1997 DE 29721385 U
(71) Anmelder: Koch, Manfred, 45731 Waltrop (DE)
(72) Erfinder: Koch, Manfred, 45731 Waltrop (DE)
(74) Vertreter: von Kirschbaum, Albrecht, Dipl.-Ing.

(57) **Zusammenfassung**

Gegenstand der Erfindung ist ein insbesondere an Bekleidungsstücken zu deren Identifizierung anbringbarer Knopf (1), der als Besonderheit einen passiven, für eine drahtlose Kommunikation mit einem Abfrage- und Lesegerät ausgelegten Kleintransponder enthält, der bei Ansprechen auf ein Abfragesignal eines Abfrage- und Lesegeräts ein mit einem Identifikationscode versehenes Antwortsignal dorthin abstrahlt. Der Kleintransponder enthält in einer integrierten Elektronikeinheit, einem sogenannten "TAG" (6), eine Sende- und Empfangseinrichtung, also z.B. eine Antenne oder Drahtspule (7), und einen damit verbundenen integrierten elektronischen Schaltungschips (8).

## Beschreibung

Die Erfindung bezieht sich auf einen passiven Kleintransponder zum Empfang eines von einem Abfrage- und Lesegerät (Scanner) drahtlos übertragenen Abfragesignals, das auch der Energieversorgung des Kleintransponders dient, und zur Aussendung eines mit einem Identifikationscode versehenen Antwortsignals drahtlos zum Abfrage- und Lesegerät hin unter Verwendung einer Sende- und Empfangseinrichtung für die drahtlos übertragenen Signale und eines integrierten elektronischen Schaltungschips.

Derartige passiv arbeitende Kleintransponder sind bereits bekannt, z.B. aus EP 0 351 267 A1, EP 0 588 944 A1, EP 0 002 595 A1 und aus dem Aufsatz von T. Razban, R. Lemaitre, M. Bouthinon, A. Coumes: "Passive Transponder Card System" in der Zeitschrift "Microwave Journal", Oktober 1987, Seiten 135 bis 146.

Bei diesen kleinen Passivtranspondern, die auch häufig Transponder-"TAGs" genannt werden, handelt es sich um elektronische Bauteile, die ein berührungsloses Lesen des im Transponder für das Antwortsignal eingeprägten Identifikationscodes mittels eines Abfrage- und Lesegeräts zulassen.

Der Einsatz solcher Transponder-"TAGs" erfolgt zur Zeit beispielsweise serienmäßig als Wegfahrsperre bei Automobilen oder zur Identifizierung von Gasbehältern. Die Anwendungsmöglichkeiten von Transponder-"TAGs", die gewöhnlich mit Funkwellenübertragung zum Abfrage- und Lesegerät hin arbeiten und einen intelligenten Schaltungschip sowie als Antenne eine Sende- und Empfangsspule enthalten, sind vielfältig.

Die elektronischen Bauteile des Transponder-"TAGs" sind in der Regel auf Folien oder Karten aufgetragen und mit einer Plastik- oder Glasschicht umhüllt. Es hat sich jedoch herausgestellt, daß sich die bislang bekannten Transponder-"TAGs" zur Kenntlichmachung und eindeutigen Identifizierung von Bekleidungsstücken nicht einsetzen lassen, da sie sich insbesondere wegen der Geschmeidigkeit und Dehnbarkeit von Textilprodukten an diesen auf Dauer nicht ohne Schwierigkeiten oder überhaupt nicht in stabiler Weise anbringen lassen. Insbesondere für die Organisation bei der Lagerverwaltung, beim Transport und beim Handel von Bekleidungsstücken ist es jedoch von wesentlicher Bedeutung, alle Bekleidungsstücke EDV-mäßig zu erfassen, zu überwachen und zu verfolgen.

Aufgabe der Erfindung ist es, eine für den Einsatz an Bekleidungsstücken geeignete und ohne großen technischen sowie kostenmäßigen Aufwand ausführbare Anbringungsweise eines passiven Kleintransponders, also eines Transponder-"TAGs", zu schaffen.

Gemäß der Erfindung, die sich auf einen passiven Kleintransponder der eingangs genannten Art bezieht, wird diese Aufgabe durch eine Anbringung des passiven Kleintransponders in oder auf einem insbesondere für Bekleidungsstücke vorgesehenen und an diesem befestigbaren Knopf gelöst. Der Knopf, der bekanntlich sogar ein Symbol für die Bekleidungsindustrie ist, läßt sich an Bekleidungsstücken leicht annähen und ist nahezu zerstörungsfrei.

Ist er entsprechend der Erfindung mit einem passiven Transponder versehen, so kann er das jeweilige Bekleidungsstück betreffende Daten an ein Abfrage- und Lesegerät übermitteln, das dann seinerseits an die elektronische Datenverarbeitung der jeweiligen Organisation angeschlossen ist.

Beim Gegenstand der Erfindung handelt es sich, vereinfacht dargestellt, also um einen lesbaren Knopf in einer Ausführung als elektronischer Chip in Knopfform. Mit Hilfe dieser Technologie nach der Erfindung kann jedes Teil in der Bekleidungsindustrie eindeutig identifiziert werden.

Das Lesen erfolgt mittels des Abfrage- und Lesegeräts, das auch Antennen-Scanner genannt wird, berührungslos. Der Antennen-Scanner aktiviert im Falle der zumeist üblichen Kommunikation mittels Funkwellen über sein Hochfrequenz-Abfragesignal geringe Mengen Energie in dem im Knopf enthaltenen Transponder, wodurch dessen Kennung in Form eines modulierten Hochfrequenzsignals an das Abfrage- und Lesegerät (Antennen-Scanner) übertragen wird.

Antennen-Scanner werden in diversen Ausführungen angeboten, z.B. als Handscanner in Form einer Polizeikelle, als Automatik-Scanner, der im "Vorbeilaufen" Daten erfaßt, als Kombination aus Antennen-Scanner und Barcode-Scanner sowie als Scanner, der weitere Automatisierungen des Materialtransports zuläßt.

Der passive Transponder nach der Erfindung läßt sich in vorteilhafter Weise als Knopf in Sandwichbauweise ausführen, bei welcher die Sende- und Empfangseinrichtung für die drahtlos übertragenen Signale sowie der damit verbundene elektronische Schaltungschip, die zusammen zu einer flach ausgebildeten Elektronikeinheit, nämlich dem sogenannten "TAG", integriert sind, zwischen den Sandwichschichten angeordnet sind. Der elektronische Schaltungschip und die damit verbundene Sende- und Empfangseinrichtung bzw. der diese Elemente integrierende "TAG" sind in zweckmäßiger Weise im Knopf so angeordnet, daß sie außerhalb des Knopfloch- oder Knopflöcherbereichs, also insbesondere im Randbereich des Knopfes zu liegen kommen. Der den Passiv-Transponder enthaltende Knopf ist vorzugsweise als Zweiloch-Knopf ausgeführt, kann aber auch als Einloch- oder Vierloch-Knopf ausgeführt werden. Der Knopf wird vorteilhaft aus umweltfreundlichem Material, z.B. aus Ökotex 100, hergestellt und ist wiederverwendbar sowie recyclebar.

Der dem Antwortsignal aufgeprägte Identifikationscode, der für jeden Knopf individuell ist, besteht in zweckmäßiger Weise lediglich in einer eindeutigen Zahl. Es müssen dann keine weiteren produktspezifischen Daten in den Transponder des für ein Bekleidungsstück vorgesehenen Knopfes eingelesen werden, so daß erst nach einer Zuordnung (Verheiratung) unternehmensbezogene Informationen in der hauseigenen elektronischen Datenverarbeitung (EDV) anfallen und nicht mit dem Knopf mitgeführt werden.

Der elektronische Schaltungschip des im Knopf untergebrachten Passiv-Transponders kann derart ausgebildet sein, daß der dem Antwortsignal aufgeprägte Identifikationscode von außen veränderbar ist (sogenannter Read-Write-TAG).

Bei einer Realisierung der drahtlosen Übertragung der Signale zwischen dem Abfrage- und Lesegerät (Antennen-Scanner) auf der einen Seite und dem Transponder auf der anderen Seite mittels Funkwellen wird die Sende- und Empfangseinrichtung im Transponder durch eine Antenne oder durch eine Leiterspule gebildet. Die Übertragungsfrequenz des passiven Transponders beträgt z.B. 125 kHz, da Antennen-Scanner für diese Arbeitsfrequenz angeboten werden.

Zur drahtlosen Signalübertragung zwischen dem Abfrage- und Lesegerät auf der einen Seite und dem entsprechend der Erfindung ausgebildeten Transponderknopf auf der anderen Seite kann auch ein durch Modulation beeinflußbares Magnetfeld vorgesehen werden. Die Sende- und Empfangseinrichtungen des Abfrage- und Lesegeräts sowie des Transponderknopfes nach der Erfindung müssen dann in einer für derartige Felder angepaßten Weise ausgebildet werden.

Aus organisatorischen Gründen ist es von Bedeutung, eine Normierung desjenigen Bereichs an den Bekleidungsstücken zu finden, in dem der den Passiv-Transponder enthaltende Knopf angebracht wird. Die linke Seite eines Bekleidungsstückes hat sich bislang schon zur Unterbringung von Waschetiketten und Marken-Labeln durchgesetzt. Daher ist es zweckmäßig, den den passiven Kleintransponder enthaltenden Knopf nach der Erfindung ebenfalls auf der linken Seite eines Bekleidungsstückes zu befestigen. Um den Abtastbereich einzugrenzen, könnte er in einem Bereich von 50 cm, von der Schulterhöhe aus gesehen, angebracht sein. Zu große Distanzen zwischen dem Knopf und dem Antennen-Scanner können eventuell Wiederholungs-Lesungen hervorrufen. Daher sollte sich bei gepolsterten Materialien der Knopf im Schulterbereich befinden.

Zweckmäßig ist jedenfalls eine Anbringung des Knopfes außerhalb oder innerhalb des Polsters an der Schulter eines Bekleidungsstückes, an einer Seitennaht auf der Innenseite des Bekleidungsstücks, beispielsweise bei einem oder auf einem Waschetikett, bei leichten Bekleidungsstücken am unteren Saum, am Preisetikett, sofern dieses links hängend angeordnet ist, oder eventuell sogar in der Verpackung an der linken Seite.

Der den passiven Transponder enthaltende Knopf nach der Erfindung zeichnet sich auch durch eine Verwendbarkeit zur Diebstahlssicherung von Bekleidungsstücken, insbesondere in Geschäften, aus.

Ein Ausführungsbeispiel eines einen passiven Transponder enthaltenden Knopfes nach der Erfindung zur Befestigung an einem Bekleidungsstück wird im folgenden anhand zweier Figuren erläutert. Es zeigen
- FIG. 1: eine Draufsicht auf einen aus glasklarem und damit transparentem Material bestehenden Knopf, und
- FIG. 2: eine Seitenansicht dieses Knopfes.

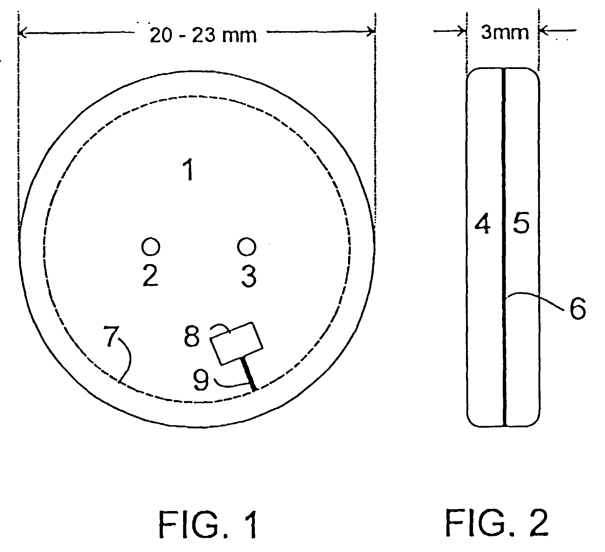

Der in FIG. 1 und FIG. 2 dargestellte Knopf 1 besteht aus transparentem Polyester-Material und weist zur Befestigung mittels Annähens an einem Bekleidungsstück zwei Löcher 2 und 3 auf. Grundsätzlich läßt sich der Knopf 1 in jeder beliebigen Gestaltung, Größe und Farbe realisieren.

Der Knopf 1, der im dargestellten Ausführungsbeispiel einen Durchmesser von etwa 20 bis 23 mm und eine Dicke von etwa 3 mm aufweist, ist in Sandwichbauweise hergestellt, wobei, wie die Seitenansicht von FIG. 2 zeigt, in der Mitte zwischen zwei Polyester-Lagen 4 und 5 ein extrem flacher passiver Transponder-"TAG" 6 zur Kommunikation mit einem Abfrage- und Lesegerät (Antennen-Scanner) untergebracht ist.

Die Draufsicht in FIG. 1 zeigt die Ausbildung dieses Transponder-"TAGs" 6 im einzelnen. Er besteht aus einer gestrichelt dargestellten Leiterschleife 7, die auch mehrere Windungen aufweisen kann und dann eine Leiterspule bildet, sowie aus einem winzigen elektronischen Schaltungschip 8, der an die Leiterschleife 7 über eine Leiterbrücke 9 angeschlossen ist.

Der elektronische Schaltungschip 8 und die Leiterschleife 7 sind im Knopf 1 so angeordnet, daß sie außerhalb des Bereichs der beiden Knopflöcher 2 und 3, also insbesondere im Randbereich des Knopfes 1 zu liegen kommen. Die Leiterschleife 7 bildet die Sende- und Empfangseinrichtung (Antenne) für die Funkwellen, mittels welcher die Signalübertragung zwischen dem Antennen-Scanner und dem passiven Transponder im an einem Bekleidungsstück angenähten Knopf 1 stattfindet.

Der elektronische Schaltungschip 8 ist beispielsweise ein sogenannter Read-Write-TAG, d.h. er ist hinsichtlich der ihm eingebbaren Daten veränderbar und sendet neben einer eindeutigen Kennung Daten zur Identifizierung aus. Diesem Schaltungschip 8 des Knopfes 1 wird also der eindeutige Identifizierungscode zur eindeutigen Kennzeichnung eines Bekleidungsstückes eingegeben.

Die Entfernung zwischen dem Abfrage- und Lesegerät und dem Knopf 1 ist vom jeweils eingesetzten Abfrage- und Lesegerät abhängig. Da die Leiterschleife 7 im Knopf 1 klein ist (im Ausführungsbeispiel etwa 17 mm Durchmesser), muß die Antenne des eingesetzten Abfrage- und Lesegeräts genügend Energie in den Knopf 1 abstrahlen und laden, damit dessen Identifizierungsdaten in der anderen Richtung mittels Funk übertragen werden können.

Bei der Abstrahlungsleistung der Antenne des Abfrage- und Lesegeräts sind jedoch postalische Grenzen gesetzt. Physikalisch sind ebenfalls Einschränkungen vorhanden. Die Abstrahlenergie nimmt entfernungsmäßig mit der dritten Potenz ab, was für die Übertragungen in beiden Richtungen gilt. Organisatorisch reicht jedoch ein Abstand vom Knopf 1 zum Abfrageund Lesegerät von weniger als 15 cm aus, womit ein problemloses und schnelles Lesen gewährleistet ist.

## Patentansprüche

1. Passiver Kleintransponder zum Empfang eines von einem Abfrage- und Lesegerät (Scanner) drahtlos übertragenen Abfragesignals, das auch der Energieversorgung des Kleintransponders dient, und zur Aussendung eines mit einem Identifikationscode versehenen Antwortsignals drahtlos zum Abfrage- und Lesegerät hin unter Verwendung einer Sende- und Empfangseinrichtung für die drahtlos übertragenen Signale und eines integrierten elektronischen Schaltungschips, **gekennzeichnet** durch eine Anbringung des passiven Kleintransponders (7, 8, 9) in oder auf einem insbesondere für Bekleidungsstücke vorgesehenen und an diesem befestigbaren Knopf (1).

2. Passiver Kleintransponder nach Anspruch 1, **dadurch gekennzeichnet,** daß der Knopf (1) in Sandwichbauweise, insbesondere aus umweltfreundlichem Material, z.B. aus Ökotex 100, hergestellt ist, wobei die Sende- und Empfangseinrichtung (7) für die drahtlos übertragenen Signale sowie der damit verbundene elektronische Schaltungschip (8), die zusammen zu einer flach ausgebildeten Elektronikeinheit, nämlich einem sogenannten "TAG" (6), integriert sind, zwischen den Sandwichschichten (4, 5) angeordnet sind.

3. Passiver Kleintransponder nach Anspruch 1 oder 2, **dadurch gekennzeichnet,** daß der elektronische Schaltungschip (8) und die damit verbundene Sende- und Empfangseinrichtung (7) bzw. der diese Elemente integrierende "TAG" (6) im Knopf (1) so angeordnet sind, daß sie außerhalb des Bereichs des Knopflochs oder der Knopflöcher (2, 3), also insbesondere im Randbereich des Knopfes zu liegen kommen.

4. Passiver Kleintransponder nach einem der vorhergehenden Ansprüche, **dadurch gekennzeichnet,** daß der dem Antwortsignal aufgeprägte Identifikationscode, der für jeden Knopf (1) individuell ist, lediglich in einer eindeutigen Zahl besteht.

5. Passiver Kleintransponder nach einem der vorhergehenden Ansprüche, **dadurch gekennzeichnet,** daß der elektronische Schaltungschip (8) derart ist, daß der dem Antwortsignal aufgeprägte Identifikationscode von außen veränderbar ist (sogenannter Read-Write-TAG).

6. Passiver Kleintransponder nach einem der vorhergehenden Ansprüche, **dadurch gekennzeichnet**, daß bei einer Realisierung der drahtlosen Übertragung der Signale zwischen dem Abfrageund Lesegerät auf der einen Seite und dem in einem Knopf (1) untergebrachten Transponder auf der anderen Seite mittels Funkwellen, vorzugsweise einer Übertragungsfrequenz von 125 kHz die Sende- und Empfangseinrichtung im Transponder durch eine Antenne oder durch eine Leiterspule (7) gebildet ist.

7. Passiver Kleintransponder nach einem der Ansprüche 1 bis 6, **dadurch gekennzeichnet**, daß zur drahtlosen Signalübertragung zwischen dem Abfrage- und Lesegerät auf der einen Seite und dem im Knopf untergebrachten Transponder auf der anderen Seite ein durch Modulation beeinflußbares Magnetfeld vorgesehen ist.

8. Passiver Kleintransponder nach einem der vorhergehenden Ansprüche, **gekennzeichnet** durch eine Anbringung des Knopfes (1) in einem normierten Bereich von Bekleidungsstücken, z.B. auf der linken Seite eines Bekleidungsstückes, etwa in Schulterhöhe, an einer Seitennaht auf der Innenseite des Bekleidungsstücks, beispielsweise bei einem oder auf einem Waschetikett, im oder außerhalb eines Schulterpolsters, am Preisetikett, sofern dieses links hängend angeordnet ist, oder bei leichten Bekleidungsstücken am unteren Saum.

9. Passiver Kleintransponder nach einem der vorhergehenden Ansprüche, **gekennzeichnet** durch eine Anbringung des Knopfes (1) in der Verpackung an der linken Seite.

10. Passiver Kleintransponder nach einem der vorhergehenden Ansprüche, **gekennzeichnet** durch eine Verwendung des mit dem Transponder versehenen Knopfes (1) zur Diebstahlssicherung von Bekleidungsstücken, insbesondere in Geschäften.
